# EUROPÄISCHE PATENTSCHRIFT

(11) **EP 2 827 794 B1**
(45) Veröffentlichungstag und Bekanntmachung des Hinweises auf die Patenterteilung: **01.06.2016**
(21) Anmeldenummer: 13719719.0
(22) Anmeldetag: 19.03.2013
(51) Int. Cl.: A61C 7/08, A61C 7/36

(54) **APPARATUR FÜR KIEFERGELENKSBEZÜGLICHE ZAHNSTELLUNGSKORREKTUREN**
APPARATUS FOR TEMPOROMANDIBULAR JOINT-RELATED CORRECTIONS OF TOOTH POSITION
APPAREIL DE CORRECTION DE LA POSITION DES DENTS PAR RAPPORT À L'ARTICULATION DE LA MÂCHOIRE

(30) Priorität: 19.03.2012 DE 102012005323
(43) Veröffentlichungstag der Anmeldung: 28.01.2015
(73) Patentinhaber: Heine, Gernot, 30900 Wedemark-Mellendorf (DE)
(72) Erfinder: Heine, Gernot, 30900 Wedemark-Mellendorf (DE)
(74) Vertreter: Schneider, Peter Christian
(86) Internationale Anmeldenummer: PCT/EP2013/000829
(87) Internationale Veröffentlichungsnummer: WO 2013/139467

(56) Entgegenhaltungen:
- WO-A1-2010/087824
- DE-A1- 10 239 464
- DE-B3-102008 057 226
- US-A1- 2011 005 527

## Beschreibung

### Gebiet der Erfindung

Die Erfindung betrifft eine Apparatur für kiefergelenksbezügliche Zahnstellungskorrekturen unter Berücksichtigung einer durch den Anwender vorgegebenen Registrat- oder Konstruktionsbissvariante, wobei ein sich mindestens auf den okklusionstragenden Teil einer Kieferseite erstreckendes Basismodul sich intermaxillär abstützt und Hohlräume zur Aufnahme von Zähnen aufweist, über die für Zahnbewegungen notwendige Spannungskräfte auf die Zähne einwirken können, wobei das Basismodul eine räumlich definierte Kieferabstützung nach Vorgabe des Anwenders aufweist.

### Stand der Technik

Kiefergelenksbezügliche Zahnstellungskorrekturen werden bisher in nach biomechanischen Eigenschaften getrennten sogenannten Apparaturen zur kieferorthopädischen Behandlung durchgeführt. Dabei werden unterschiedliche kieferorthopädische Behandlungsaufgaben für Patienten nacheinander in Anwendung gebracht. Der Behandler bzw. Anwender muss abwarten, bis ein Patient das richtige Dentitionsalter oder den nötigen funktionstherapeutischen Fortschritt für die Anwendung einer weiteren Apparaturentechnik erreicht hat.

In der Zahnmedizin versteht man unter Funktionstherapie solche Maßnahmen, die Störungen des Kausystems bezüglich der neuromuskulären und artikulären Steuerung beheben sollen. Dazu werden geeignete Apparaturen im Mundraum des Patienten eingesetzt.

Beim Zubeißen wird die Position der Kiefergelenke allein dadurch definiert, wie die Zähne des Ober- und des Unterkiefers zueinander in Kontakt stehen (Okklusionskontakt). Auch die Bewegungsmöglichkeiten des Unterkiefers und der Kiefergelenke werden unter Zahnkontakt durch die Geometrie der Zahnoberflächen bestimmt. Wenn also eine Beeinträchtigung der Funktion von Muskulatur und Gelenken durch fehlende Zähne oder Zahnfehlstellungen behandlungsbedürftig erscheint, kommen Apparaturen zur Anwendung, die das Okklusionsgeschehen therapeutisch verändern sollen. Solche Apparaturen werden üblicher Weise aus Streukunststoff oder der Kombination einer Miniplastschiene mit zusätzlich aufgetragener Kunststofffunktionsfläche hergestellt.

Auch bei funktionskieferorthopädischen Apparaturen wird die Lage des Unterkiefers gegenüber dem Oberkiefer verändert. In der Regel werden diese Apparaturen bei jungen Patienten angewendet, die sich noch im Wachstum und Zahnwechsel befinden. Zusätzlich zu sogenannten Aufbissen, weisen solche "Spangen" Konstruktionselemente auf, welche auf die umliegenden Gewebestrukturen meist durch abweisende Funktionen einwirken. Ihr Einfluss auf die Regulierung der Zahnstellung ist deshalb zumeist als passiv zu verstehen und wird in den meisten Ausführungen lediglich durch Drahtfederelemente und Schrauben erweitert.

Alle bisher bekannten kieferorthopädischen Apparaturen sind nur für beschränkte Teilgebiete des kieferorthopädischen Behandlungsspektrums konzipiert und können in der Regel auch nur für Patienten bestimmter Altersgruppen oder Dysgnathieformen (Formen der Fehlentwicklungen des Kauorgans) eingesetzt werden.

Aus der DE 698 18 045 T2 ist ein Verfahren und eine Vorrichtung für auf inkrementale Weise zu bewegende Zähne bekannt. Derartigen Alignerapparaturen (Serien transparenter Folien für schrittweise Zahnstellungskorrekturen) können auf der Basis bekannter Setup-Verfahren orthodontische Zahnbewegungen umsetzen.

Nachteilig dabei ist, dass diese lediglich Zähne und Zahnaufbauten umhüllen. Durch die Materialstärke der verwendeten Folie wird die für den Patienten angestrebte räumliche Zuordnung zwischen Oberkiefer und Unterkiefer unerwünscht verändert. Eine nahezu frei wählbare räumliche Abstützung der Kiefer gegeneinander ist durch diese Apparatur selbst nicht gegeben.

Aus der DE 10 2009 009 916 A1 ist ein Verfahren zur rechnergestützten Herstellung einer zahnmedizinischen Bissschiene bekannt, wobei die Bissschiene eine obere Kaufläche beinhaltet, mit welcher ein Gegenkiefer eines Patienten bei Verwendung der Bissschiene in Kontakt tritt.

Nachteilig dabei ist, dass die bekannte Apparatur bzw. Bissschiene im eingesetzten Zustand lediglich die Lagebeziehung zwischen Ober- und Unterkiefer verändert. Derartige passive Aufbissschienen liefern den Behandler weder eine diagnostische Anzeige pathologischer Muskelhyperaktivität, noch ermöglichen sie die kiefergelenksbezogene Rekonstruktion eines gesunden Kau- und Gelenksystems.

Aus der DE 10 2010 012 702 A1 ist eine passive Aufbissschiene bekannt, bei der ein den Zähnen aufliegender retentionsbildender Teil der Schiene durch einen austauschbaren und zum Gegenkiefer gerichteten Teil ergänzt wird. Dieser soll eine "kranial konkave Kalottenform" aufweisen.

Auch diese bekannte Apparatur bzw. Aufbissschiene weist die oben genannten Nachteile auf und verändert lediglich die Lagebeziehung zwischen Ober- und Unterkiefer.

Aus der US 2011/0005527 A1, worauf die zweiteilige form des Anspruchs 1 basiert, ist eine Apparatur für kiefergelenkspezifische Zahnstellungskorrekturen unter Berücksichtigung einer durch den Anwender vorgegebenen Registrat- oder Konstruktionsvariante bekannt, wobei sich mindestens ein auf den okklusionstragenden Teil einer Kieferseite erstreckendes Basismaterial intermaxiliär abstützt und Hohlräume zur Aufnahme von Zähnen aufweist.

Dabei benötigt die bekannte Apparatur mindestens zwei Basismodule am gegenüberliegenden Kiefer und ist nicht geeignet um Zahnbewegungen von einzelnen Zähnen in vertikaler Richtung durchzuführen.

Vorteilhafte Ausführungsformen der Erfindung gehen aus den abhängigen Ansprüchen hervor.

Aus der WO 2010/087824 A1 ist eine Vorrichtung zur Behandlung von Schlafapnoe bekannt. Dabei sollen Oberkiefer und Unterkiefer gegeneinander verschoben werden, um eine Schlafapnoe abzuwenden. Zusätzlich soll die Position gehalten werden, um den Rachenraum freizuhalten. Insofern ist der Aufbau über den Zähnen nicht für Zahnstellungskorrekturen einzelner Zähne konstruiert und geeignet. Die zwischen den Zähnen sich über eine Mehrzahl von Zähnen erstreckenden Auflagen behindern zudem den Zweck des Anmeldungsgegenstandes.

Aus der DE 10 2008 057 226 B3 ist eine kieferorthopädische Vorrichtung zur Behandlung von Zahn- und/oder Kieferfehlstellungen mittels okklusal erzeugter Kräfte bekannt. Dabei sollen okklusal erzeugte Kräfte beim Beißen von einem oder mehreren zwischen den Zahnreihen befindlichen flüssigkeitsgefüllten Kraftaufnahmekissen aus weichelastischem Material aufgenommen werden, wodurch eine Flüssigkeit über kommunizierende Verbindungen zu einem oder mehreren aus weichelastischem Material bestehenden flüssigkeitsgefüllten Kraftabgabekissen verschoben wird, die auf einer Seite mit einer formstabilen, nachjustierbaren Basis als Kraftwiderlager verbunden sind und mit der gegenüberliegenden Seite an den zu beeinflussenden Zähnen und/oder Kieferabschnitten anliegen, sodass beim Zubeißen eine therapeutisch wirksame Kraft ausgeübt wird, deren Richtung von der geometrischen Anordnung der Basis und des Kraftabgabekissens bestimmt wird. Dabei müssen zwangsläufig immer mehrere Zähne übergriffen werden, da sonst die die angestrebte Druckverteilung nicht möglich ist. Einzelne Zähne können mit einer solchen Vorrichtung in vertikaler Richtung nicht bewegt werden.

Aus der DE 102 39 464 A1 ist eine Vorrichtung zur Behandlung des Kiefergelenks mit jeweils einem Kissen zum Auflegen auf die Kauflächen der Backenzähne auf der linken und rechten Seite bekannt, wobei die Kissen aus einem mit einem flexiblen Material hergestellten Hülle gebildet sind, die mit Flüssigkeit gefüllt ist und wobei die Kissen über einen Schlauch zum Flüssigkeitsaustausch miteinander verbunden sind.

### Aufgabenstellung

Aufgabe der vorliegenden Erfindung ist es daher, eine Apparatur zu schaffen, die biomechanische Eigenschaften bisher getrennt angewendeter kieferorthopädischer Gerätegruppen in einer neuen apparativen und therapeutischen Gesamtstrategie vereint.

### Darstellung der Erfindung

Die Aufgabe bezüglich der Apparatur wird in Verbindung mit dem Oberbegriff des Anspruches 1 dadurch gelöst, dass die Kieferabstützung von Aufbissen und/oder Interceptoren gebildet wird, die für vertikale Korrekturen der Alveolarfortsätze mit einem Füllmaterial vorgebbarer Elastizität gefüllte Hohlräume aufweisen, dass das Basismodul aus einem Basisclip besteht, der mindestens eine Zahnkrone überfasst, dass der Basisclip zu dem gegenüberliegenden Kiefer hin einen Funktionshohlkörper als Teil des Aufbisses oder des Interceptors aufweist, und dass der Funktionshohlkörper mit dem Füllmaterial gefüllt ist, und dass der Funktionshohlkörper zur Okklusionsfläche der abgedeckten Zahnkrone hin einen umlaufenden Druckübertragungsring aufweist.

Die Erfindung ermöglicht während der aktiven Durchführung von Zahnbewegungen die dimensionsgetreue Zielabstützung der Kiefer gegeneinander bis zum Okklusionskontakt (entsprechend der Zuordnungsvorgabe des Anwenders) und den Austausch von okklusionsabstützenden Elementen.

Für vertikale Korrekturen der Alveolarfortsätze ist zur Intrusion das Füllmaterial des Funktionshohlkörpers beispielsweise ein weichelastisches Füllmaterial und zur Vermeidung von Intrusion des darunter liegenden Zahnes beispielsweise ein extrem hartes Füllmaterial.

Bei der Verwendung gummielastischer Füllungsmaterialien als Ergänzungsmodul, das durch mechanische Friktion oder Retention mit den Aufbisshohlräumen reversibel verbunden werden kann, führt dies bei stetiger Kaudruckbelastung zur Intrusion des darunter liegenden Zahnes.

Extrem harte Füllungsmaterialien bewirken eine empfindliche Aufbissreaktion. Sie lösen bei plötzlicher Belastung den sogenannten "Kirschkernreflex" aus, wodurch die Kiefer spontan geöffnet werden. Auch bei Dauerbelastung dieser Situation, führt die körperlich sensorische Reaktion dazu, das eine dauerhafte Kaudruckbelastung und somit Intrusionen nun vermieden werden.

Noch über umfangreiche dreidimensionale Zahnstellungskorrekturen hinaus, ist die mit der erfindungsgemäßen Apparatur zu realisierende, räumlich kontrollierte Korrektur einer Kiefergelenkfehlstellung durch die Ausbildung und Vorgabe der Kieferabstützung als eine 4-D-Apparatur (vier-dimensionale-Apparatur) möglich, die als vierte Dimension das Prinzip der Raumkopplung zwischen den Zahnreihen und Kiefergelenken bereits in der Planung der Zahnbewegung und der Gerätekonstruktion mit Hilfe einer 4-D-Software nutzt. Die Information zu den räumlichen Lagebeziehungen zwischen den Zähnen einerseits und den Kiefergelenkköpfchen in Relation zu ihren Gelenkpfannen andererseits, kann von bekannten bildgebenden Verfahren der Medizin geliefert werden. Sowohl CT's (Computertomographien) als auch DVT's (Dentale Volumentomographien) liefern derzeit STL-Datensätze, die mit 3-D-Planungssoftwareprogrammen kombinierbar sind.

Gemäß einer bevorzugten Ausführungsform der Erfindung sind mindestens ein Ergänzungsmodul und/oder Hilfsteile vorgesehen.

Die okklusionsabstützenden Elemente können durch ihre modulare Konstruktion selbst mit Mechaniken und Hilfsteilen zur aktiven Übertragung von Kräften und Drehmomenten auch reversibel verbunden werden. Zahnstellungskorrekturen können dadurch sowohl schrittweise durch aufeinanderfolgenden Wechsel eines oder mehrerer Geräteanteile bzw. Apparateteile durchgeführt werden, als auch durch deren Kombination mit Mechaniken und elastischen Elementen, die an diesen Anteilen (Modulen) und direkt an Zähnen wie prothetischen Versorgungen (auch Implantaten) befestigt werden können.

Dadurch können unterschiedliche kieferorthopädische Behandlungsaufgaben - welche sonst für Patienten nacheinander in Anwendung gebracht werden müssen - gleichzeitig und somit rationeller ablaufen. Der Behandler bzw. Anwender muss nicht mehr abwarten, bis ein Patient das richtige Dentitionsalter oder den nötigen funktionstherapeutischen Fortschritt für die Anwendung einer weiteren Apparaturentechnik erreicht hat. Nahezu alle bekannten Behandlungsaufgaben können durch Austausch einzelner Module oder deren Neukombination innerhalb direkt gelöst werden, wenn sie während einer Therapie sinnvoll erscheinen.

Darüber hinaus wird durch die Möglichkeit der gleichzeitigen Anwendung intermittierender Kräfte bei kontrollierter und veränderbarer Abstützung der Okklusion und damit der Kiefergelenke das medizinische Behandlungsspektrum erweitert. Vor allem vertikale Korrekturen der Alveolarfortsätze und Korrekturen der Kiefergelenkspositionen, werden erstmals gleichzeitig mit umfangreichen Zahnstellungskorrekturen bewältigt. Nach den Prinzipien von Setup-Techniken (digital, analog o.ä.) können nun mit funktionstherapeutischen Methoden vereint werden und gleichzeitig mit an Zähnen fixierten Apparaturmodulen interagieren, indem sie diese nicht nur umhüllend übergreifen sondern direkt zur Übertragung von Kräften und Drehmomenten angreifen.

Hervorzuheben ist die mögliche Integration einer für funktionstherapeutische Zwecke geeigneten Gestaltung der okklusionstragenden Bereiche in der Apparatur selbst. Diese ist bei den bisher verbreiteten orthodontischen Apparaturen nicht bekannt (Multibracketapparaturen und Alignertechniken).

Die Apparatur berücksichtigt konstruktiv grundsätzlich eine durch den Behandler bzw. Anwender vorgegebene Registrat- oder Konstruktionsbissvariante. Die Erfindung eröffnet erstmals diese Möglichkeit durch den dreidimensional veränderbaren Aufbau ihres Basismoduls. Sie ermöglicht die Vereinigung biomechanisch vorteilhafter Eigenschaften unterschiedlichster bekannter Gerätegruppen durch ihr modulares Grundkonzept sowie vorzugsweise softwarebasierte Planung und RP-Produktionsverfahren (Rapid Prototyping) in einer Apparatur.

Erstmals müssen die okklusionstragenden Anteile eines orthodontischen Apparaturenkonzeptes auch nicht wie sogenannte fixierte Aufbissbehelfe oder cranio-orthopädische-Positionierungsapparaturen (Copa) an Zähnen oder Prothetik aufgeklebt werden. Es kann also eine Gerätefolge hergestellt werden, bei der jedes einzelne Behandlungsgerät Zahnstellungen wie bei Alignertechniken in kleinen Schritten korrigiert und dabei immer wieder die geplante räumliche Zuordnung zwischen Oberkiefer und Unterkiefer konstant übernimmt. So ist erstmals auch jederzeit eine Umstellung der räumlichen Kieferzuordnung möglich, ohne im Munde fixierte Aufbisshilfen verändern oder entfernen zu müssen.

Dabei weist das Basismodul eine räumlich definierte Kieferabstützung nach Vorgabe des Anwenders auf. Die Kieferabstützung wird von Aufbissen und Interceptoren gebildet, die mit einem Füllmaterial vorgebbarer Elastizität gefüllte Hohlräume aufweisen.

Eine flüssige oder gasförmige Füllung der Hohlräume verstärkt kaum die Kaudruckstabilität der geschaffenen Aufbissbereiche. Dadurch wird ein Patient der Parafunktionen (Knirschen oder Pressen) gesundheitsgefährdend ausübt, die abgebildeten Aufbissgestaltungen (bei Verwendung üblicher Folienstärken) eindrücken. Es existiert mit diesem Basismodul somit auch ein neues funktionsdiagnostisches Instrument, das gleichzeitig Zahnstellungskorrekturen gezielt umsetzen kann.

Nach einer weiteren bevorzugten Ausführungsform der Erfindung weist das Basismodul ein mit ihm verbundenes Funktionsmodul auf, das bei Veränderung des Basisteils wiederverwendbar ist.

Gemäß einer weiteren bevorzugten Ausführungsform der Erfindung kann das Basismodul mit dem am gegenüberliegenden Kiefer anordenbaren Ergänzungsmodul interagieren.

Nach einer weiteren bevorzugten Ausführungsform der Erfindung ist das Basismodul oder sein Funktionsmodul über ein elastisches Verbindungselement mit dem Ergänzungsmodul verbunden.

Die orthodontisch wirksamen und somit zumeist aktiven Basismodule zeichnen sich also dadurch aus, dass sie zum Zwecke der Nahrungsaufnahme und leichteren Mundhygiene - wie bei gewöhnlichen Alignern - aus dem Munde entnommen werden können. Dabei verfügen insbesondere diese Basismodule gleichzeitig über die räumlich definierte Kieferabstützung nach Vorgabe des Anwenders (ähnlich funktionstherapeutischen Aufbissschienen), ohne dass zusätzliche fixierte Aufbisse notwendig wären, um selbst größere intermaxilläre Differenzen überwinden zu können. Diese Basismodule werden patientenindividuell gestaltet und können mit kostengünstig standardisiert produzierten Funktionsmodulen zusammengefügt werden (ein einfaches Beispiel sind Miniexpansionsschrauben, deren Geometrie als Datensatz in die 3-D-Planung des Basismoduls integriert werden kann). Auf diese Weise muss nicht die gesamte Apparatur nach der Umsetzung geringer Zahnbewegungen (wie bei Alignern oder Elastokieferorthopädischen Geräten wie z.B. Positionern) verworfen werden. Ergänzungsmodule sind retentions-, verankerungs- oder widerlagerbildende Hilfsteile, die vorzugsweise an Zahnoberflächen oder Zahnersatz verklebt werden und so mit Basis- und Funktionsmodulen durch direkten Kontakt oder Verbindungselemente interagieren. Es können potentiell ökonomisch und ökologisch sinnvoll Apparaturen eingespart werden.

Gemäß einer weiteren bevorzugten Ausführungsform der Erfindung weist das Basismodul auf seiner Innenseite ein Ergänzungsmodul in Form eines am Basismodul fixierten Expansionsbogens auf. Dadurch kann das Basismodul materialsparend ausgebildet sein und durch den Expansionsbogen zusätzliche Expansionskräfte auf die Zahnflächen übertragen.

Nach einer weiteren bevorzugten Ausführungsform der Erfindung weist das Basismodul auf seiner der Innenseite abgewandten Außenseite Aufnahmen für Hilfsteile auf.

Gemäß einer weiteren bevorzugten Ausführungsform der Erfindung bilden die Aufnahmen Aufnahmetaschen für die Hilfsteile, die als an der Außenseite von Zähnen angeordnete Attachments ausgebildet sind und eine Rillenaufnahme für modulverbindende Elastics (beispielsweise elastische Bänder) aufweisen.

Die Apparatur berücksichtigt konstruktiv grundsätzlich eine durch den Behandler vorgegebene Registrat- oder Konstruktionsbissvariante. Durch diese Vorgabe wird die Dimension des okklusionsabstützenden Anteiles im Basismodul definiert. Die Basismodule erstrecken sich auf dem okklusionstragenden Teil einer Kieferseite und können mit dem Basismodul der anderen Kieferseite verbunden sein. Produktionsabhängig kann dieses auch mit einer die Zähne übergreifenden Trägerfolie (hier einer Ergänzungsmodul-Variante) verbunden werden, um darüber Spannungskräfte über den gesamten Zahnbogen verteilen zu können. Weiterhin liegt dem Basismodul ein Setup (gleich, ob analog, digital oder vergleichbar) zugrunde. Dadurch erfolgen neben der Kiefergelenksabstützung auch Zahnstellungskorrekturen, wodurch sich bereits das Basismodul gegen Miniplastschienen, Aufbissschienen und Aligner abgrenzt. Um rein passive Zahnbewegungen, wie bei funktionskieferorthopädischen Geräten (z.B. Bionator) zu ermöglichen, können die vorausbedachten Zahnbewegungen als Hohlräume angelegt werden.

Damit die oben beschriebenen Basismodule neben der räumlichen Abstützung zwischen Ober- und Unterkiefer und orthodontischen Zahnbewegungen weitere Funktionen ausführen können, können sie mit weiteren Modulen verbunden werden.

Wangenschilde und Lippenabstützungen, sowie Spannhaken, die mit zahnfixierten Modulen interagieren sollen und weitere vorteilhafte Ausführungen von Ergänzungsmodulen darstellen, ergänzen durch unterschiedliche mechanische Verbindungen mit der Grundapparatur, deren therapeutische Potenz.

Bei reversibler Anbindung durch Steckverbindungen o.ä., müssen diese Ergänzungsmodule nicht für jeden orthodontischen Zahnbewegungsschritt mit dem Basismodul ausgetauscht werden. Vielmehr können sie durch die noch zu beschreibenden Verbindungselemente abgenommen und mehrfach wiederverwendet werden.

Damit die Kraft- und Drehmomenteinwirkung der Apparatur auf Zähne und Alveolarknochen verstärkt werden kann, sind Hilfsteile erforderlich, die durch verschiedene Klebeverbindungen an Zähnen und Zahnersatz befestigt werden können. Die gegenüber Alignerapparaturen und Multibracketapparaturen veränderten biomechanischen Eigenschaften und Einsatzmöglichkeiten, erfordern auch andere vorteilhafte Ausführungen sogenannter Attachments. Beispielsweise eine Ausführung, die durch Aufkleben auf Zahnoberflächen sowohl die Retention des Basismoduls an der Zahnoberfläche verstärken, als auch durch Einhängen von Elastics in die eingelassene Führung, definierte Kräfte direkt auf den zu bewegenden Zahn übertragen kann.

Eine erfindungsgemäße Apparatur kann dadurch hergestellt werden, dass in einem ersten Schritt eine räumlich 3-dimensional definierte Lagebeziehung zwischen Oberkiefer und Unterkiefer durch die Veränderung der Zahnoberflächengestalt mittels Aufwachstechnik in einem Artikulator erfolgt, und dass in einem zweiten Schritt eine Überabformung der mit Aufbissen und Interceptoren neu gestalteten Modellgeometrie durch physischen oder optischen Abdruck, erfolgt.

In einem dritten Schritt kann die zuvor in den Artikulator übertragene Kieferrelation eines Patienten in ein Setup-Modell, das in einem analogen oder digitalen Verfahren erzeugt wird, übertragen werden.

Zum inkrementalen Bewegen von Zähnen kann die Apparatur angepasst und entsprechende unterschiedliche Module hergestellt werden.

Die Herstellung reversibler Verbindungen zwischen den einzelnen Modulen und Hilfsteilen erfordert Miniaturmechanismen bekannter Schiebe-, Steck- oder sonstiger lösbarer Arretierungen.

Weil herausnehmbare kieferorthopädische Apparaturen bisher fast ausschließlich von Hand aus streubaren Acrylaten, unterschiedlichen thermoplastischen Tiefziehfolien oder im Falle von Positionern aus Silikon hergestellt werden, gestaltet sich die handwerkliche Integration der Verbindungselemente anspruchsvoll.

Aktuelle 3-D-Gestaltungssoftware ermöglicht die virtuelle Verbindung einzelner vordefinierter Datensätze und deren Integration in eine individuell entwickelte Aufnahmeform.

Mehrere Softwareanbieter verfügen dazu über Programme zur virtuellen Zahnstellungskorrektur, die an virtuellen Zahnoberflächen fixierte Hilfsteile simulieren können.

Die nötigen weiteren Entwicklungsschritte für eine virtuelle Planung der beschriebenen Apparatur und der mit ihrem Einsatz verbundenen Zahnbewegungen, erfordert die Integration komplexerer Geometrien und Mechanismen, die sich in ihrer Dimension z.B. durch Schraubung verändern können. Folglich muss auch die Simulation der virtuellen Zahnbewegungen die biomechanischen Eigenschaften der Apparatur und die damit einhergehende Relativbewegung einer Apparatur gegenüber den tragenden Zahnoberflächen simulieren können.

In einer einfachen, bereits produzierbaren Konstruktion eines Basismoduls, kann initial eine räumlich 3-dimensional definierte Lagebeziehung zwischen Oberkiefer und Unterkiefer durch die Veränderung der Zahnoberflächengestalt mittels Aufwachstechnik in einem Artikulator erfolgen. Einer solchen Lagezuordnung liegt immer eine Übertragung der schädelbezüglichen Oberkieferlage und eine verfahrensabhängige Gestaltung eines Unterkieferlageregistrates zugrunde.

Nach einer Überabformung der mit Aufbissen und Interceptoren neu gestalteten Modellgeometrie durch physischen oder optischen Abdruck, entsteht die Grundlage für ein neues Modell, das die Form der Aufbisse und Interceptoren beinhaltet. Auf diese Weise wird zunächst die zuvor in den Artikulator übertragene Kieferrelation eines Patienten in ein Setup-Modell übertragen. Alle Herstellungsschritte können wie hier beschrieben mit analogen oder digitalen Verfahren erzeugt werden.

Ein austauschbares und funktionstüchtiges Ergänzungsmodul wird mit der Füllung des Hohlraumes zwischen der Tiefziehfolie und der überdeckten Okklusionsfläche realisiert. Wenn ein Tiefziehverfahren zur Herstellung des Basismodul-Körpers verwendet wird, sollte durch den Abtrag der Folienmaterialstärke im okklusionstragenden Bereich, die Dimensionstreue der registratbezogenen intermaxillären Abstützung wieder hergestellt werden. Dadurch eröffnet sich zusätzlich der Kontakt zwischen dem darunter liegenden Ergänzungsmodul und der Gegenbezahnung. Somit wird auch der erwünschte Steuerungseffekt auf den vertikalen therapeutischen Effekt noch direkter. Durch den Austausch der Füllungen und deren vertikale Expansion, kann mit gummielastischen Einsätzen eine fortschreitende Zahnintrusion bewirkt werden.

Auch durch die Geometrie der Interceptoren im vorderen Seitenzahnbereich und die Ausdehnung der Abstützungsfläche im Bereich der posterioren intermaxillären Abstützung, lässt sich der elastische Widerstand bei Kaudruckbelastungen steuern.

Eine konstante Einhaltung der Kieferrelation während gleichzeitig orthodontische Zahnstellungskorrekturen durchgeführt werden, erfolgt durch ein selektives Setup insbesondere der nicht direkt mit der Abstützung belasteten Zähne. Der Weg der gewünschten Zahnstellungskorrektur kann für diese Zähne nach denselben Prinzipien erarbeitet werden. Es ist dabei allerdings notwendig, den gesamten, auf die Korrekturbewegung bezogenen Zahnumfang zuvor freizustellen. Der prothetische Zahnäquator wird für diese Bereiche also für die Zahnbewegung nicht belastet. Die nötigen orthodontisch wirksamen Kräfte werden nun vorzugsweise (weil günstig und gerätesparend) über Hilfsteile unter inter- oder intramaxillärer Aufspannung von Elastics aufgebracht, die an dem zu korrigierenden Zahn in die Einkerbung des Attachments eingehängt werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibung der Zeichnungen

In den Zeichnungen zeigen:
- Figur 1:: eine Seitenansicht im Ausschnitt einer in einem Artikulator angeordneten Apparatur;
- Figur 2:: eine Untersicht einer Apparatur in einer Oberkiefer-Apparatur-Ausführung;
- Figur 3:: eine Draufsicht auf eine Apparatur in einer Unterkiefer-Apparatur-Ausführung;
- Figur 4:: eine Seitenansicht im Ausriss und vergrößerter Darstellung der Ergänzungsmodule von Figur 1;
- Figur 5:: eine Draufsicht auf ein Basismodul;

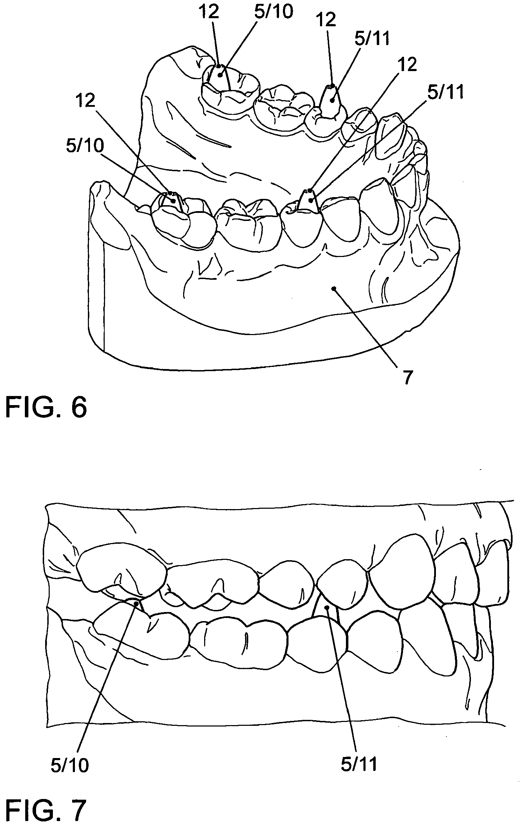

- Figur 6:: eine räumliche Darstellung eines Unterkieferabdrucks mit Funktionsaufbiss und Interceptor;
- Figur 7:: eine Seitenansicht in vergrößerter Darstellung der okklusionsgetragenen Abstützungen am einartikulierten Modell;
- Figur 8:: eine räumliche Darstellung eines einfachen Basismoduls mit integrierter Kiefergelenks bezüglicher Abstützung;
- Figur 9:: eine räumliche Darstellung eines als Attachment ausgebildeten Hilfsteiles in vergrößerter Darstellung;

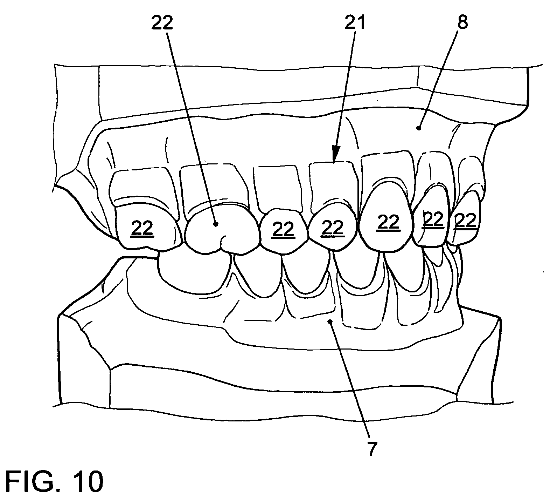

- Figur 10:: eine räumliche Darstellung eines bekannten Setupmodells, bei dem die Zahnmodelle im Oberkiefer jeweils in eine vorgesehene Position bringbar sind;
- Figur 11:: eine räumliche Darstellung eines Schädels mit gestrichelt angedeuteten Schnittebenen und Darstellung der dreidimensionalen Zahnreihen und der Kiefergelenke sowie dem Prinzip der Raumkopplung zwischen Zahnreihen und der Kiefergelenke als "vierte Dimension" und die Darstellung eines Basismoduls;
- Figur 12:: eine Seitenansicht im Schnitt eines Basismoduls und eine Seitenansicht im Ausriss des zugehörigen Zahns mit noch nicht aufgesetztem Basismodul;
- Figur 13:: eine Seitenansicht im Schnitt des Basismoduls von Fig. 12 aufgesetzt auf den zugehörigen Zahn und angedeutetem Zahn am gegenüberliegenden Kiefer;
- Figur 14:: eine Seitenansicht im Schnitt eines weiteren Basismoduls aufgesetzt auf den zugehörigen Zahn und angedeutetem Zahn am gegenüberliegenden Kiefer;
- Figur 15:: eine Seitenansicht im Schnitt eines weiteren Basismoduls aufgesetzt auf den zugehörigen Zahn und angedeutetem Zahn am gegenüberliegenden Kiefer;
- Figur 16:: eine Seitenansicht im Schnitt eines weiteren Basismoduls aufgesetzt auf den zugehörigen Zahn und angedeutetem Zahn am gegenüberliegenden Kiefer;
- Figur 17:: eine Seitenansicht im Schnitt eines weiteren Basismoduls aufgesetzt auf den zugehörigen Zahn und angedeutetem Zahn am gegenüberliegenden Kiefer;
- Figur 18:: eine Seitenansicht im Schnitt eines weiteren Basismoduls aufgesetzt auf den zugehörigen Zahn und angedeutetem Zahn am gegenüberliegenden Kiefer;
- Figur 19:: eine Abfolge von Seitenansichten der okklusionsgetragenen Abstützungen am Gebiss mit schrittweise geometrisch reduzierten Funktionshohlkörpern der Basismodule und
- Figur 20:: eine Abfolge von Verfahrensschritten zur Herstellung der Apparatur.

### Beschreibung der Ausführungsbeispiele

Eine Apparatur 1 besteht im Wesentlichen aus einem Basismodul 2, einem Ergänzungsmodul 3 und Hilfsteilen 4.

Das Basismodul 2 weist eine räumlich definierte Kieferabstützung 5 auf. Ein mit dem Basismodul 2 verbundenes Funktionsmodul 6 kann bei Veränderung des Basisteils bzw. Basismoduls 2 wiederverwendet werden.

Das Basismodul 2 kann mit dem am jeweils gegenüberliegenden Kiefer 7, 8 anordenbaren Ergänzungsmodul 3 hinteragieren.

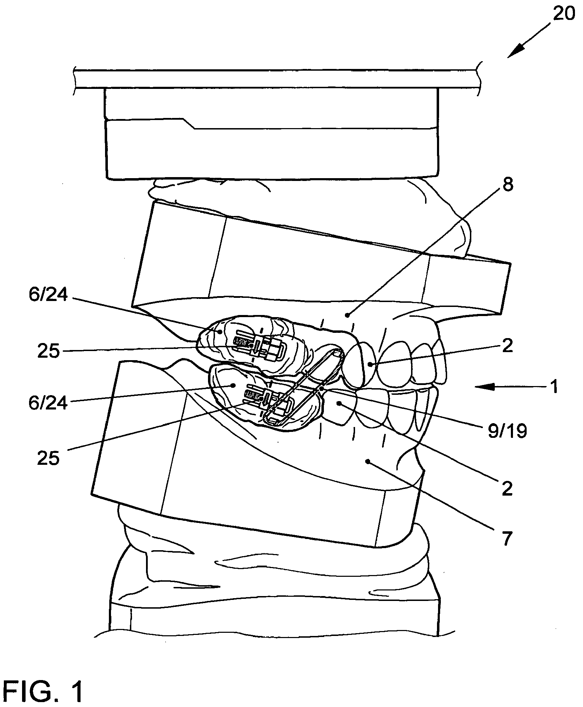

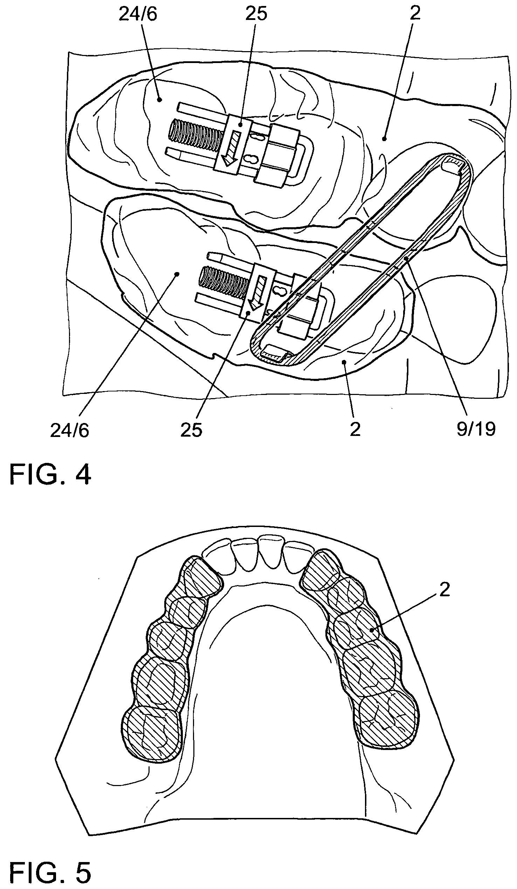

Entsprechend dem Ausführungsbeispiel der Figuren 1 und 4 ist das Basismodul 2 oder sein Funktionsmodul 6 über ein elastisches Verbindungselement 9 (Elastic) mit dem Ergänzungsmodul 3 verbunden.

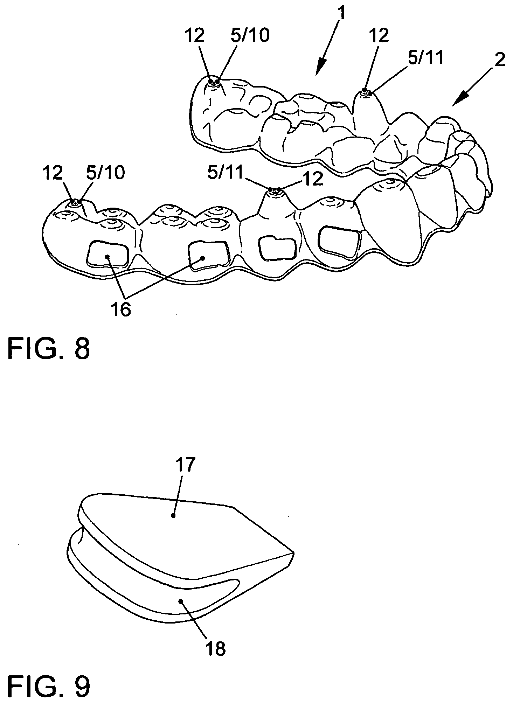

Entsprechend dem Ausführungsbeispiel der Figur 8 wird die Kieferabstützung 5 von Aufbissen 10 und Interceptoren 11 gebildet, die mit einem Füllmaterial 12 vorgebbarer Elastizität gefüllte Hohlräume aufweisen.

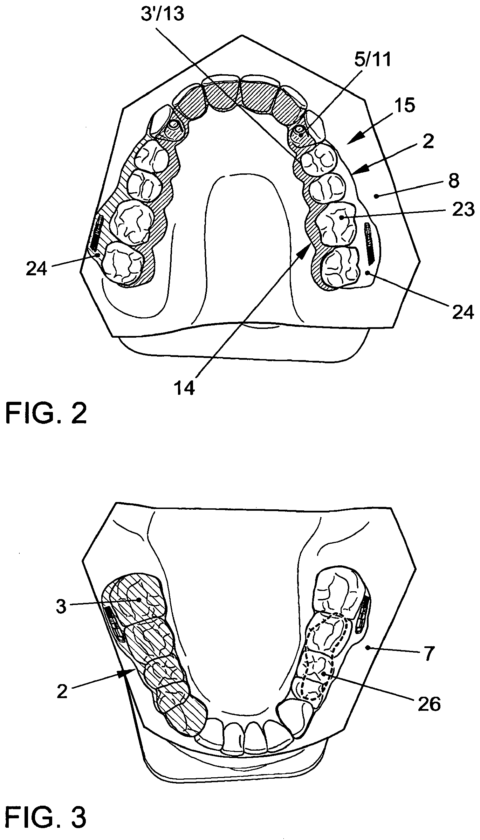

Das Basismodul 2 weist auf seiner Innenseite ein Ergänzungsmodul 3 in Form eines am Basismodul 2 fixierten Expansionsbogens 13 auf (siehe Figur 2).

Entsprechend dem Ausführungsbeispiels von Figur 8 weist das Basismodul 2 auf seiner der Innenseite 14 abgewandten Außenseite 15 Aufnahmen 16 für Hilfsteile 17 auf, die als Attachements an den nicht dargestellten Zähnen eines Patienten durch verkleben fixiert sind und eine Rillenaufnahme 18 für die Modul verbindenden Verbindungselemente 9, die als Elastics 19 ausgebildet sind.

Die Apparatur 1, die hier auch als kieferorthopädische 4-D-Apparatur bezeichnet wird, ermöglicht mit den Prinzipien der Raumkopplung und der sensomotorischen Steuerung von Kaukräften sowie einer determinierten elastischen Verformung, räumlich kontrollierte Zahnbewegungen und Kieferlagekorrekturen.

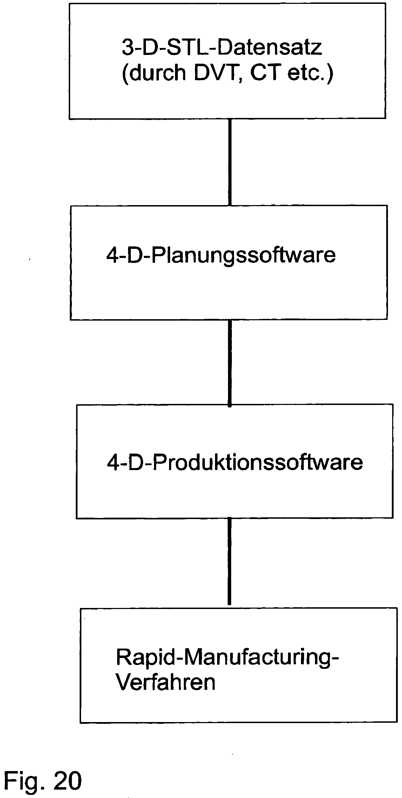

Entsprechend Figur 20 wird ein 3-D-STL-Datensatz durch DVT, CT, etc. ermittelt, der die dreidimensionale Geometrie der Zahnreihen und der Kiefergelenke, gegebenenfalls inklusive Bissregistrat, beinhaltet.

Im nächsten Schritt wird mit Hilfe einer Software (4-D-Planungssoftware) berechnet und simuliert, wie die Zähne 22, 32 beider Kiefer 7, 8 bewegt werden müssen, um beide Kiefergelenke 33 in der gewünschten Lage mindestens durch Tripodisierung (Abstützung von Seitenzähnen und einem Zahn im Frontbereich, also eine Dreipunktlagerung zwischen Oberkiefer 8 und Unterkiefer 7) abzustützen.

In einem Folgeschritt werden mit einer 4-D-Produktionssoftware die notwendigen Basismodule 2 und deren Verbindung über ihre Basisclips 27 sowie die schrittweise Verformung aller Komponenten geplant.

Zur eigentlichen Herstellung der Apparaturen 1 und ihrer Basismodule 2 bieten sich sogenannte Rapid-Manufacturing-Verfahren, insbesondere 3-D-Druckverfahren an, um die notwendigen veränderlichen Geometrien und Materialkombinationen der Apparaturen und Basismodule in einem Produktionsgang zu bewältigen.

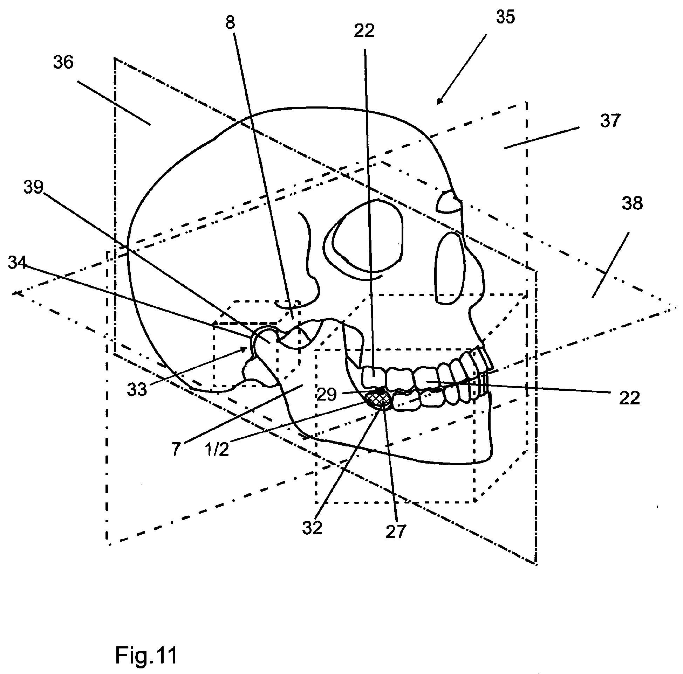

Figur 11 zeigt einen Schädel 35 mit gestrichelt angedeuteter vertikaler Ebene 36, einer transversalen Ebene 37 und horizontaler Ebene 38. Über das Prinzip der Raumkopplung sind die Zähne 21 des Oberkiefers 8 mit dem Os temporale, dem Gelenklager 34 des Kiefergelenks 33 verbunden. Über den Unterkiefer 7 sind die Zähne 32 des Unterkiefers 7 räumlich mit dem Condylus, dem Gelenkköpfchen 39 des Kiefergelenks 33 paarig rechts und links verbunden.

Bei jedem Zubeißen wird also die räumliche Position beider Kiefergelenke 33 durch die Positionen der Zahnkontakte determiniert. Insbesondere die vertikale Veränderung eines einzigen Zahnes 32 führt zwangsläufig zu einer berechenbaren Änderung beider Kiefergelenksseiten.

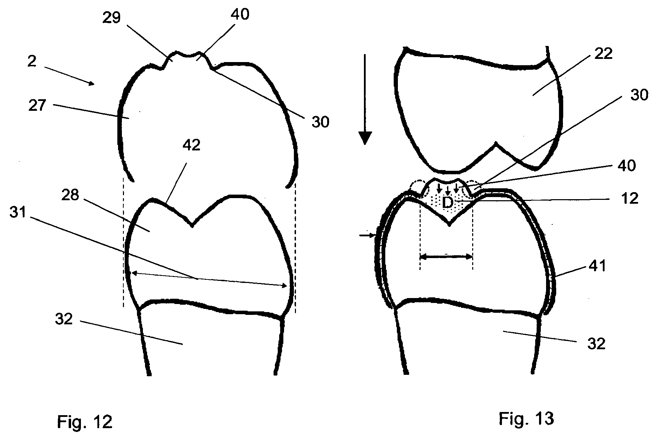

Entsprechend den Figuren 12 und 13 kann eine Apparatur 1 bereits aus einem einzigen Basismodul 2 bestehen. Dabei weist das Basismodul 2 einen Basisclip 27 mit einem Bereich der Zahnkrone 28 eines abzudeckenden Zahnes 32 angeordneten Funktionshohlkörpers 29 mit einem Hohlraum 40. Die vorausgestimmte Widerstandsform des gefüllten Funktionshohlkörpers 29 determiniert wesentlich die Verformbarkeit. Ein umlaufender Übertragungsring 30, der bei gasförmiger oder flüssiger Füllung unter Kaudruckeinwirkung als Dichtung gegenüber der Okklusalfläche 42 der Zahnkrone 28 dient. Der Basisclip 27 dient zur reversiblen Sicherung der Position des Funktionshohlkörpers 29 zwischen den Zahnkronen 28. Durch Extension des Basisclips 27 werden ggf. mehrere Funktionselemente miteinander verbunden.

Die elastischen Eigenschaften des Funktionshohlkörpers 29 (einschließlich seiner Dämpfung) hängen wesentlich von der Komprimierbarkeit der Füllung, d.h. des Füllmaterials 12 unter Kaudruck ab. Eine Polysacharidschicht 41 auf der Zahnkrone 28 begünstigt die Abdichtung des Hohlraumes 40 bei einem gasförmigen Füllmaterial 12. Der sogenannte prothetische Äquator 31 wird durch Basisclip 27 des Basismoduls 2 zur Retentionsbildung übergriffen. Die bukkolinguale Ausdehnung der okklusalen Funktionshohlkörperabstützung liegt zur Abdichtung immer innerhalb der Ausdehnung des prothetischen Äquators 31.

Figur 13 zeigt ein Basismodul 2, dessen Funktionshohlkörper 29 als Element zur Autonevellierung geeignet ist. Die Widerstandsform des Funktionshohlkörpers 29 ist dabei so berechnet, dass der Widerstand gegen den Kaudruck mit der Verformung ansteigt. Das neuromuskuläre System stoppt dabei die vertikale Reduktion des Funktionshohlkörpers 29, sobald die sensorisch korrekte Dimension erzielt ist.

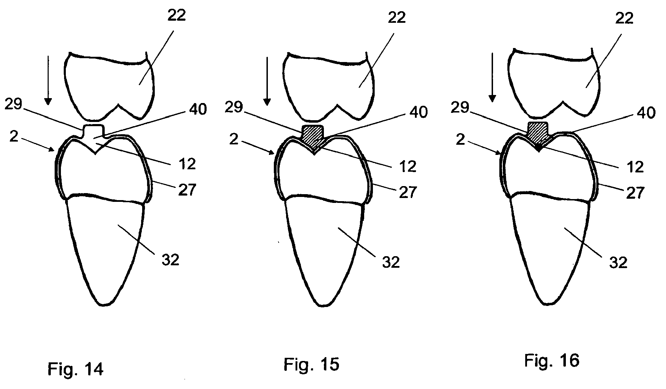

Entsprechend zeigt Figur 14 einen Hohlraum 40, der mit einem gasförmigen Füllmaterial 12 gefüllt ist. Die Gasfüllung ergibt dabei eine starke Widerstandsform. Die Widerstandsform erlaubt nur geringe Verformungen. Die plane Oberfläche des Funktionshohlkörpers 29 lässt den Spitzenkontakt des Gegenzahnes 22 federn. Die Gasfüllung dämpft dabei das Federn. Bei andauernder Druckbelastung entsteht so eine feine Intrusion beider Zähne.

Das Basismodul 2 entsprechend Figur 15 weist ein Füllmaterial 12 auf, das elastisch ausgebildet ist.

Durch das Gegenlager wird dabei immer eine vertikale Distanz benachbarter Zähne aufgespannt, so dass über eine im Voraus eingestellte Verformung des auf Nachbarzähne erweiterten Basisclips 27, im Wesentlichen ein oder mehrere Nachbarzähne auch vertikal bewegt werden können.

Figur 16 zeigt ein Basismodul 2 eines Funktionshohlkörper 29, das mit einer Füllung ausgestattet ist, die mindestens in der Spitze zum Zahn hin sehr hart ist und vertikal direkt bei Okklusionsdruck hart die dermodontale Sensorik beeinflusst. Dadurch wird der Kaudruck in dieser Position reflektorisch gelöst und zugunsten anderer Zahnbewegung verlagert. Der harte Kern des Füllmaterials 12 löst damit den sogenannten Kirschkernreflex aus.

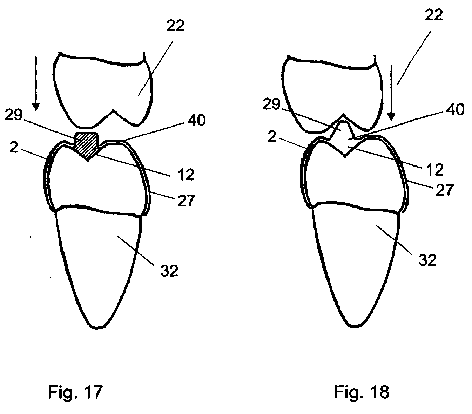

Figur 17 zeigt ein Basismodul 2, dessen Hohlraum 40 des Funktionshohlkörpers 29 eine weichelastische Füllung aufweist. Durch die weichelastische Füllung wirkt das Basismodul 2 als Intrusionselement.

Das Basismodul 2 von Figur 18 wirkt als ein Zwischenhöckerelement. Dieses Basismodul 2 besitzt mit seinem Funktionshohlkörper 29 alle Merkmale des Basiselementes 2, lässt sich aber durch seine nach inzisal schmale Form zwischen den Höckern der Gegenbezahnung, dem Zahn 22, positionieren.

Figur 20 zeigt eine Abfolge von Verfahrensschritten zur Herstellung einer Apparatur 1, bei der die Form, d.h. Geometrie der Basismodule in vorberechneten Schritten jeweils verändert wird.

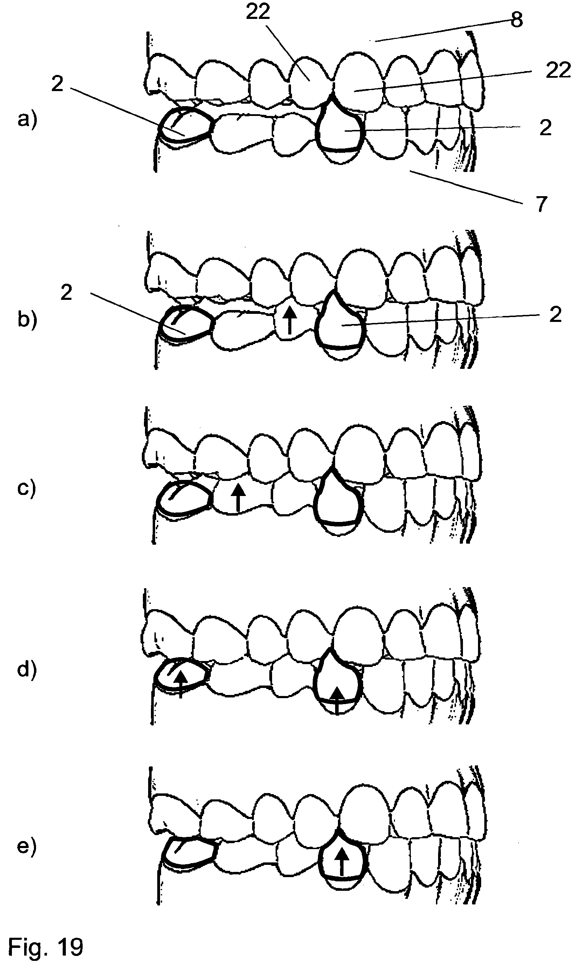

Entsprechend den Figuren 19a und 19b wird die Form der Basismoduls 2, das die Zähne 22 so verändert, dass die Zähne 32 des Unterkiefers 7 auch kontrolliert extrudiert werden können. Durch Austausch der von den Basismodulen 2 gebildeten Apparatur 1 mit schrittweise geometrisch reduzierten Funktionshohlkörpern 29 werden auch die Zähne den Funktionshohlkörpern 29 in Okklusionskontakt geführt.

Zum Herstellen einer Apparatur 1 wird in einem ersten Schritt eine räumlich dreidimensional definierte Lagebeziehung zwischen Oberkiefer 8 und Unterkiefer 7 durch die Veränderung der Zahnoberflächengestalt mittels Aufwachstechnik in einem Artikulator 20 hergestellt und in einem zweiten Schritt wird eine Überabformung der mit Aufbissen 10 und Interceptoren 11 neu gestalteten Modellgeometrie durch physischen oder optischen Abdruck hergestellt. In einem dritten Schritt wird die zuvor in den Artikulator 20 übertragende Kieferrelation eines Patienten in einem - an sich bekannten - Setup-Modell 21, das in einem analogen oder digitalen Verfahren erzeugt wird, übertragen. Die Zähne 22 des Setup-Modells 21 sind in die vom Anwender/Behandler jeweils vorgesehene Position bringbar.

Zum inkrementalen Bewegen von Zähnen wird die Apparatur 1 schrittweise angepasst und jeweils entsprechende unterschiedliche Module 2, 3 werden hergestellt.

Figur 2 zeigt in einer Draufsicht eine okklusionstragende Oberfläche 23 eines Basismoduls 2. Ein Ergänzungsmodul 24 zur Einzelzahn-Distalisierung ist über ein Schraubelement 25 mit dem Basismodul 2 verbunden (siehe Figur 1, 2, 3).

Figur 3 zeigt die Ausführung einer Unterkieferapparatur, deren funktionstherapeutisch wirksame Oberfläche des Basismoduls 2 gestrichelt dargestellt ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 1: Apparatur
- 2: Basismodul
- 3, 3`: Ergänzungsmodul
- 4: Hilfsteil
- 5: Kieferabstützung
- 6: Funktionsmodul
- 7: Unterkiefer
- 8: Oberkiefer
- 9: Verbindungselement
- 10: Aufbiss von 5
- 11: Interceptor von 5
- 12: Füllmaterial von 10, 11
- 13: Expansionsbogen von 3
- 14: Innenseite von 2
- 15: Außenseite von 2
- 16: Aufnahmen von 2
- 17: Hilfsmittel
- 18: Rillenaufnahme von 17
- 19: Elastic von 9
- 20: Artikulator
- 21: Setup-Modell
- 22: Zähne von 21
- 23: okklusionstragende Oberfläche
- 24: Ergänzungsmodul
- 25: Schraubelement
- 26: funktionstherapeutische Oberfläche
- 27: Basisclip von 5
- 28: Zahnkrone von 32
- 29: Funktionshohlkörper von 27
- 30: Druckübertragungsring von 29
- 31: prothetischer Äquator von 28
- 32: Zahn
- 33: Kiefergelenk
- 34: Gelenklager von 33
- 35: Schädel
- 36: vertikale Ebene
- 37: transversale Ebene
- 38: horizontale Ebene
- 39: Gelenkköpfchen von 33
- 40: Hohlraum von 29
- 41: Polysacharidschicht
- 42: Okklusionsfläche

## Patentansprüche

1. Apparatur (1) für kiefergelenksbezügliche Zahnstellungskorrekturen unter Berücksichtigung einer durch den Anwender vorgegebenen Registrat- oder Konstruktionsbissvariante
wobei ein sich mindestens auf den okklusionstragenden Teil einer Kieferseite erstreckendes Basismodul (2) sich intermaxillar abstützt und Hohlräume zur Aufnahme von Zähnen aufweist, über die für Zahnbewegungen notwendige Spannungskräfte auf die Zähne (22) einwirken können,
wobei das Basismodul (2)eine räumlich definierte Kieferabstützung (5) nach Vorgabe des Anwenders aufweist, und
dass die Kieferabstützung (5) von Aufbissen (10) und/oder Interceptoren (11) gebildet wird, die für vertikale Korrekturen der Alveolarfortsätze mit einem Füllmaterial (12) vorgebbarer Elastizität gefüllte Hohlräume
aufweisen, **dadurch gekennzeichnet dass** das Basismodul (2) aus einem Basisclip (27) besteht,
der mindestens eine Zahnkrone (28) überfasst,
dass der Basisclip (27)zu dem gegenüberliegenden Kiefer hin einen Funktionshohlkörper (29) als Teil des Aufbisses (10) oder des Interceptors (11) aufweist, und
dass der Funktionshohlkörper (29) mit dem Füllmaterial (12) gefüllt ist, und
dass der Funktionshohlkörper (29) zur Okklusionsfläche der abgedeckten Zahnkrone (28) hin einen umlaufenden Druckübertragungsring (30) aufweist.

2. Apparatur nach Anspruch 1,
**dadurch gekennzeichnet,**
**dass** der Basisclip (27) den prothetischen Äquator (31) der Zahnkrone (28) übergreift.

3. Apparatur nach Anspruch 1 oder 2,
**dadurch gekennzeichnet,**
**dass** mindestens ein Ergänzungsmodul (3, 24) und/oder Hilfsteile (4) vorgesehen sind.

4. Apparatur nach einem der Ansprüche 1 bis 3,
**dadurch gekennzeichnet,**
**dass** das Basismodul (2) ein mit ihm verbundenes Funktionsmodul (6) aufweist, das bei Veränderung des Basisteils (2) wiederverwendbar ist.

5. Apparatur nach einem der Ansprüche 1 bis 4,
**dadurch gekennzeichnet,**
**dass** das Basismodul (2) mit dem am gegenüberliegenden Kiefer anordenbaren Ergänzungsmodul (3) interagieren kann.

6. Apparatur nach Anspruch 5,
**dadurch gekennzeichnet,**
**dass** das Basismodul (2) oder sein Funktionsmodul (6) über ein elastisches Verbindungselement (9) mit dem Ergänzungsmodul (3) verbunden ist.

7. Apparatur nach einem der Ansprüche 1 bis 6,
**dadurch gekennzeichnet,**
**dass** das Basismodul (2) auf seiner Innenseite (14) ein Ergänzungsmodul (3, 23) in Form eines am Basismodul (2) fixierten Expansionsbogens (13) aufweist.

8. Apparatur nach einem der Ansprüche 1 bis 7,
**dadurch gekennzeichnet,**
**dass** das Basismodul (2) auf seiner der Innenseite (14) abgewandten Außenseite (15) Aufnahmen für Hilfsteile (17) aufweist.

9. Apparatur nach einem der Ansprüche 1 bis 8
**dadurch gekennzeichnet,**
**dass** die Aufnahmen (16) Aufnahmetaschen für die Hilfsteile (17), die als an der Außenseite von Zähnen (22) angeordnete Attachments ausgebildet sind und eine Rillenaufnahme (18) für modulverbindende Elastics (19) aufweisen, bilden.

## Claims

1. An Apparatus (1) for temporomandibular joint-related corrections of tooth position, taking into account a variant of the registration or construction of the bite predetermined by the user
wherein a base module (2) extending at least on the occlusion-bearing part of one side of the jaw is supported in an intermaxillary manner and has cavities to accommodate teeth, by means of which the tension forces necessary for tooth movements can act on the teeth (22), wherein the base module (2) has a three-dimensionally defined jaw support (5) designed in accordance with specifications of the user,
and that the jaw support (5) is formed by bite blocks (10) and/or interceptors (11) which have cavities filled with a filling material (12) of predeterminable elasticity for vertical corrections of the alveolar processes,
**characterized in that**
the base module (2) comprises a base clip (27) covering at least one tooth crown (28), the base clip (27) has a functional hollow body (29) facing the opposing jaw as part of the bite block (10) or the interceptor (11), and
the functional hollow body (29) is filled with the filling material (12), and
the functional hollow body (29) has a circumferential pressure transfer ring (30) facing the occlusion surface of the covered tooth crown (28).

2. The apparatus according to Claim 1,
**characterized in that**
the base clip (27) overlaps the prosthetic equator (31) of the tooth crown (28).

3. The apparatus according to Claim 1 or 2,
**characterized in that**
at least one supplementary module (3, 24) and/or auxiliary parts (4) are provided.

4. The apparatus according to any of Claims 1 to 3,
**characterized in that**
the base module (2) has connected to it a functional module (6) which can be reused when the base component (2) is modified.

5. The apparatus according to any of Claims 1 to 4,
**characterized in that**
the base module (2) can interact with the supplementary module (3) which can be arranged on the opposing jaw.

6. The apparatus according to Claim 5,
**characterized in that**
the base module (2) or its functional module (6) is connected to the supplementary module (3) by means of an 29 elastic connecting element (9).

7. The apparatus according to any of Claims 1 to 6,
**characterized in that**
the base module (2) has on its inner side (14) a supplementary module (3, 23) in the form of an expansion arch (13) affixed to the base module (2).

8. The apparatus according to any of Claims 1 to 7,
**characterized in that**
the base module (2) has receptacles for auxiliary parts (17) on its outer surface (15) facing away from the inner side (14).

9. The apparatus according to any of Claims 1 to 8,
**characterized in that**
the receptacles (16) form receiving pockets for the auxiliary parts (17), which are embodied as attachments arranged on the outer side of teeth (22) and which have a grooved receiving element (18) for elastics (19) connecting the modules.

## Revendications

1. Appareil (1) pour effectuer des corrections de la position des dents par rapport à l'articulation de la mâchoire en tenant compte d'une variante occlusale à l'enregistrement ou à la construction spécifiée par l'utilisateur,
sachant qu'un module de base (2), s'étendant au moins sur la partie d'un côté de la mâchoire qui supporte l'occlusion, est en appui intermaxillaire et présente des cavités destinées à recevoir des dents, par l'intermédiaire desquelles les forces de tension nécessaires aux déplacements des dents peuvent agir sur les dents (22), sachant que le module de base (2) présente un appui (5) sur la mâchoire défini dans l'espace suivant les spécifications de l'utilisateur,
et que l'appui (5) sur la mâchoire est formé par des pièces à mordre (10) et/ou des intercepteurs (11) qui, pour des corrections verticales des prolongements alvéolaires, présentent des cavités remplies d'un matériau de remplissage (12) ayant une élasticité prédéfinissable,
**caractérisé en ce que** le module de base (2) est constitué d'un clip de base (27) qui recouvre au moins une couronne dentaire (28),
**en ce que** le clip de base (27) présente en direction de la mâchoire opposée un corps creux fonctionnel (29) comme partie de la pièce à mordre (10) ou de l'intercepteur (11),
et **en ce que** le corps creux fonctionnel (29) est rempli du matériau de remplissage (12),
et **en ce que** le corps creux fonctionnel (29) présente, en direction de la surface d'occlusion de la couronne dentaire recouverte (28), une bague périphérique (30) de transfert de pression.

2. Appareil selon la revendication 1, **caractérisé en ce que** le clip de base (27) engage en recouvrement l'équateur prothétique (31) de la couronne dentaire (28).

3. Appareil selon la revendication 1 ou 2, **caractérisé en ce qu'**il est prévu au moins un module complémentaire (3, 24) et/ou des pièces auxiliaires (4).

4. Appareil selon l'une des revendications 1 à 3, **caractérisé en ce que** le module de base (2) présente un module fonctionnel (6) qui lui est relié et qui peut être réutilisé en cas de modification de la partie de base (2).

5. Appareil selon l'une des revendications 1 à 4, **caractérisé en ce que** le module de base (2) peut interagir avec le module complémentaire (3), qui peut être disposé sur la mâchoire opposée.

6. Appareil selon la revendication 5, **caractérisé en ce que** le module de base (2) ou son module fonctionnel (6) est relié au module complémentaire (3) par l'intermédiaire d'un élément de liaison élastique (9).

7. Appareil selon l'une des revendications 1 à 6, **caractérisé en ce que** le module de base (2) présente sur son côté intérieur (14) un module complémentaire (3, 23) sous la forme d'un arc d'expansion (13) fixé sur le module de base (2).

8. Appareil selon l'une des revendications 1 à 7, **caractérisé en ce que** le module de base (2) présente, sur son côté extérieur (15) opposé au côté intérieur (14), des logements pour des pièces auxiliaires (17).

9. Appareil selon l'une des revendications 1 à 8, **caractérisé en ce que** les logements (16) forment des poches réceptrices pour les pièces auxiliaires (17), qui sont réalisées sous la forme d'attachements disposés sur le côté extérieur des dents (22) et qui présentent un logement rainuré (18) pour des éléments élastiques (19) reliant les modules.
